(19) Europäisches Patentamt
European Patent Office
Office européen des brevets

(11) Veröffentlichungsnummer: **0 412 407 A2**

(12) # EUROPÄISCHE PATENTANMELDUNG

(21) Anmeldenummer: **90114637.3**

(22) Anmeldetag: **31.07.90**

(51) Int. Cl.5: **C08G 64/14**, C08G 64/18

(30) Priorität: **11.08.89 DE 3926616**
**10.02.90 DE 4004032**

(43) Veröffentlichungstag der Anmeldung:
**13.02.91 Patentblatt 91/07**

(84) Benannte Vertragsstaaten:
**BE DE FR GB IT NL**

(71) Anmelder: **BAYER AG**

**D-5090 Leverkusen 1 Bayerwerk(DE)**

(72) Erfinder: **Idel, Karsten-Josef, Dr.**
**Am Schwarzkamp 38**
**D-4150 Krefeld(DE)**
Erfinder: **Grigo, Ulrich, Dr.**
**Michelsheide 9**
**D-4152 Kempen 3(DE)**
Erfinder: **Westeppe, Uwe, Dr.**
**Vogelskamp 72**
**D-4020 Mettmann(DE)**
Erfinder: **Weymans, Günther, Dr.**
**Karl-Arnold-Strasse 4**
**D-5090 Leverkusen(DE)**
Erfinder: **Horlacher, Peter, Dr.**
**Ginsterweg 4**
**D-7913 Senden(DE)**

(54) **Fliessverbesserte Polycarbonate guter Zähigkeit.**

(57) Gegenstand der vorliegenden Erfindung sind die Verwendung spezieller monofunktioneller Verbindungen als Kettenabbrecher zur Herstellung von thermoplastischen, aromatischen Polycarbonaten, Verfahren zur Herstellung dieser Polycarbonate sowie die danach erhältlichen Polycarbonate.

EP 0 412 407 A2

# FLIESSVERBESSERTE POLYCARBONATE GUTER ZÄHIGKEIT

Gegenstand der vorliegenden Erfindung ist die Verwendung monofunktioneller Verbindungen mit einem Molekulargewicht ( $\overline{M}_n$ Zahlenmittel, ermittelt mit Hilfe der Gelpermeationschromatographie in geeigneten Lösungsmitteln) zwischen 320 und 15.000 g/Mol, bevorzugt zwischen 340 und 12.000 g/Mol, insbesondere bevorzugt zwischen 350 und 7.000 g/Mol - mit Ausnahme von monofunktionellen Polystyrolen - als Kettenabbrecher zur Herstellung von thermoplastischen, aromatischen Polycarbonaten, wobei die monofunktionellen Verbindungen als Polymere verhakungsarm sind, das heißt, ein $M_c$ von mindestens 14.000 g/Mol, vorzugsweise von 20.000 g/Mol bis 120.000 g/Mol, haben, und phenolische OH-Gruppen als Monofunktion haben.

Monofunktionelle Polystyrole sind bekannt, welche als Polymere verhakungsarm sind [siehe Makromol Chem. 190, Seiten 487 bis 493 (1989)].

Ein Rückschluß auf die erfindungsgemäße Verwendung der monofunktionellen Verbindungen aus dieser Literaturstelle ist nicht a priori möglich, da ihre Verwendung als Kettenabbrecher bei der Polycarbonatsynthese in dieser Literaturstelle weder beschrieben noch nahegelegt ist.

Derartige monofunktionelle Polystyrole sind inzwischen auch aus EP-O 348 744 (Le A 26 076-EP) bekannt. Sie können zum Aufbau von Polykondensaten verwendet werden (Seite 7, Zeile 7, der EP-A 0 348 744).

Auch die Literaturstelle "Die makromolekulare Chemie", Rapid Communications 5, Seiten 399 bis 402 (1984), beschreibt monofunktionelle Polystyrole, die mit Polycarbonaten unter anderem zu Blockcopolymeren PS-PC-PS verknüpft werden.

In der EP-A 0 199 824, Beispiel 1, ist dagegen ein Polystyrol-Polycarbonat-Blockcopolymer vom Typ $(A-B)_n$ beschrieben, wie sich aus dem Herstellungsverfahren dieses Beispiels ableiten läßt.

Polystyrolendgruppen führen, wie das Vergleichsbeispiel 2 in vorliegender Anmeldung zeigt, zu Produkten mit schlechtem Kerbschlag.

Andere monofunktionelle Verbindungen, die als Polymere verhakungsarm sind, sind beispielsweise in der US-PS 4 319 003 beschrieben. Es handelt sich um monofunktionelle Polymethylmethacrylate, jedoch nicht mit einer phenolischen OH-Gruppe als Monofunktion. Die Verwendung dieser monofunktionellen Verbindungen bei der Herstellung von Polymethylmethacrylat-Polycarbonat-Blockcopolymeren ist ebenfalls beschrieben, wobei die Polymethacrylat-Blöcke ein $\overline{M}_n$ (Zahlenmittel) von 500 bis 35.000 haben und der Polycarbonatblock ein $\overline{M}_n$ (Zahlenmittel) von 500 bis 30.000 haben und die Blockcopolymere ein $\overline{M}_n$ - (Zahlenmittel) von 15.000 bis 100.000 haben.

Die Herstellung dieser Blockcopolymeren erfolgt jedoch in anderer Weise, indem die monofunktionellen Polymethylmethacrylate durch radikalische Polymerisation hergestellt werden, in Monochlorformiate übergeführt werden und dann mit vorgefertigten Polycarbonat-Diphenolen im Verhältnis 2:1 umgesetzt werden.

Nachteile sind eine breite Molekulargewichtsverteilung der ohne Kettenabbrecher hergestellten Polycarbonat-Diphenole, eine breite Molekulargewichtsverteilung der radikalisch hergestellten Polymethylmethacrylate und das Vorliegen von nicht eingebauten Polymethylmethacrylatsegmenten im Blockcopolymer, bedingt durch die allgemein bekannten Nebenreaktionen bei radikalischen Polymerisationen oder die geringe Reaktivität von aliphatischen OH-Gruppen bei der Überführung in die Monochlorformiate (siehe dazu Schnell, Chemistry and Physics of Polycarbonates, Interscience Publishers, 1964, Seite 57, Absätze 2 und 3).

In der US-PS 4 351 924 sind weitere monofunktionelle verhakungsarme Verbindungen beschrieben auf Basis hy droxyhydrocarbyl-alkylmethacrylat-Polymere. Ihre Verwendung in Polymermischungen wird ebenfalls beschrieben. Die Verwendung dieser Verbindungen als Kettenabbrecher bei der Polycarbonatsynthese ist nicht nahegelegt.

EP-A 02 93 908 beschreibt ebenfalls monofunktionelle Polystyrole, in deren Gegenwart Polycarbonate synthetisiert werden, die somit als Kettenabbrecher fungieren. Das Molekulargewicht dieser monofunktionelle Polystyrole liegt jedoch über 20.000 (Seite 3, Zeile 49 der EP-A), was zur Eintrübung der Produkte führt.

Aus der DE-OS 1 595 777 sind Polymere mit am Rückgrat befindlichen Seitenresten und darauf aufgepfropften Polycarbonatketten beschrieben. In unserem Einspruch gegen die entsprechende DE-AS 1 595 777 haben wir ausgeführt, daß die Pfropfgrundlagen im Mittel auch eine Funktionalität von kleiner 1 haben, also monofunktionell sein können.

Aus der DE-OS 3 717 172 (Le A 25 000) sind ebenfalls Vinylcopolymerisate mit aufgepfropften Seitenketten bekannt, wobei die Pfropfgrundlage ein $\overline{M}_n$ von 45.000 bis 95.000 g/Mol hat, wobei offen gelassen ist, ob alle Pfropfstellen der Pfropfgrundlage jeweils an der Pfropfreaktion partizipieren.

Die radikalische Polymerisation von Vinylmonomeren in Gegenwart von thermoplastischen Polycarbonaten ist ebenfalls bekannt (siehe US-Patent 3 462 515 und GB-PS 2 245 852). Falls Pfropfreaktionen dabei stattfinden, ist keine gezielte Stelle in der Polycarbonatkette zu lancieren; außerdem sind die Molekulargewichte der aufpolymerisierten Vinylpolymere im allgemeinen höher, als bei anionisch polymerisierten Vinylpolymerisaten.

Gemäß DE-OS 2 402 177 werden Vinylchlorid enthaltende Mischungen von olefinisch ungesättigten Monomeren in Gegenwart von aromatischen Polycarbonaten radikalisch polymerisiert.

Gemäß DE-OS 2 636 783 (Le A 16 689) und gemäß DE-OS 2 702 626 (Le A 17 356) werden COOH-haltige Segmente mit 1 bis 4 COOH-Gruppen beziehungsweise mit 1 bis 5 COOH-Gruppen in die Polycarbonatsynthese einbezogen.

Gemäß EP-PS 9747 sind verzweigte hochmolekulare, thermoplastische Verbindungen, die aus Polycarbonat-Segmenten und aus Polymer-Segmenten aufgebaut sind, wobei diese dadurch hergestellt werden, daß man Polycarbonat mit mindestens einer ungesättigten Endgruppe pro Molekül in Gegenwart eines radikalisch polymerisierbaren Monomeren polymerisiert.

Aus der DE-OS 3 618 378 (Le A 24 330) sind Polyolefincarbonsäuren und ihre Verwendung zur Herstellung von Polyolefin-Polycarbonat-Blockcopolymeren bekannt.

Aus der JA 63 003 022 (nur als Referat vorliegend) sind Carboxyl-gruppenhaltige Phenole für die Polycarbonatsynthese als Kettenabbrecher bekannt. Die so hergestellten COOH-haltigen Polycarbonate sind als Ausgangsprodukte für Blockcopolymere geeignet.

Aus der DE-OS 2 712 230 (Le A 17 926) sind verzweigte Segmentpolymere bekannt.

Aus JA 58/101 112 (nur als Referat vorliegend) sind Copolymere auf Basis von Polycarbonaten mit speziellen Endgruppen und Polymerisaten bekannt.

Aus JA 55/133 405 (nur als Referat vorliegend) sind leicht verarbeitbare Polycarbonatharze bekannt, die durch Polymerisation von ungesättigten Monomeren in wäßriger Dispersion in Gegenwart von Fließmittelhaltigem Polycarbonatgranulat erhalten werden.

Aus JA 59/27 908 (nur als Referat vorliegend) sind Polycarbonatblockcopolymere bekannt, die aus Polycarbonaten und polymerisierbaren Monomeren erhalten werden, wobei die Polycarbonate radikalbildende Gruppen enthalten.

Verhakungsarme Polymere sind beispielsweise in S.M. Aharoni, Macromolecules, 1986, Vol. 19, S. 426 ff, und S. Wu, Journ. Polym. Sci Part B: Polymer Physics, Vol. 27, (1989), S. 723 bis 741, beschrieben. Verhakungsarme Polymere sind danach beispielsweise Polyisobutylene, Polytetrafluorethylene, Polymethylacrylate, Polymethylmethacrylate, Polyethylmethacrylate, Poly-n-butylmethacrylate, Poly-t-butylmethacrylate, Poly-2-ethylbutylmethacrylate, Poly-n-octylmethacrylate, Poly-n-dodecyl-methacrylate, Polyvinylacetate und Polydialkylsiloxane.

Gegenüber den bisher eingesetzten Kettenabbrechern bei der Polycarbonatsynthese und in Anbetracht der bekannten monofunktionellen Verbindungen war nicht zu erwarten, daß bei Einsatz von monofunktionellen Verbindungen, die verhakungsarm sind - mit Ausnahme der monofunktionellen Polystyrole - als Kettenabbrecher bei Polycarbonatsynthese Polycarbonate mit sowohl verbessertem Fließverhalten als auch verbesserter Kerbschlagzähigkeit erhalten werden. Dies wird am Beispiel des Polysiloxans als Kettenabbrecher gezeigt (siehe Beispiel 2 der vorliegenden Anmeldung).

Das Phänomen der verhakungsarmen Polymeren sei im folgenden noch kurz erläutert:
Die Verhakungsdichte von Polymeren in der Schmelze kann durch das Molekulargewicht eines Kettensegmentes zwischen zwei Verschlaufungen der Kette in der Schmelze beschrieben werden. Die Verhakungsdichte eines Polymeren ist sehr groß, wenn dieses Molekulargewicht, im folgenden $M_c$ = "kritisches Molekulargewicht" genannt, klein ist. Ein Polymer ist im Sinne der vorliegenden Erfindung verhakungsarm, wenn $M_c$ mindestens 14.000 g/Mol beträgt. Diese Verhakungsdichte, durch $M_c$ charakterisiert, kann experimetell auf verschiedene Weisen gemessen werden.

Denkbar ist beispielsweise die Messung des sogenannten Plateaumoduls oberhalb der Glastemperatur des Polymeren, aus dem sich das Molekulargewicht zwischen zwei physikalischen Netzstellen $M_e$ bestimmen läßt. Im allgemeinen gilt, daß $M_c$ ungefährt das Doppelte von $M_e$ ist. Für eine genaue Ermittlung des $M_c$ bestimmt man allerdings die Viskosität als Funktion des Molekulargewichtes. Dazu fraktioniert man ein vorgegebenes Polymer nach den unterschiedlichen Molekulargewichten und mißt für jede Fraktion unter gleichen Bedingungen die Viskosität in der Schmelze. Dabei legt man sich in der Regel auf Schergeschwindigkeiten zwischen 0,1 $sec^{-1}$ und 10 $sec^{-1}$ und Temperaturen zwischen 100° C und 180° C oberhalb der Glastemperatur des betreffenden Polymeren fest. Soweit das betreffende Polymer teilkristallin ist, mißt man die Viskosität oberhalb seiner Schmelztemperatur.

Trägt man die Wertepaare Viskosität - Molekulargewicht (Zahlenmittel $M_n$, bestimmt in einem für das jeweilige Polymer geeigneten Lösungsmittel mit Hilfe der Gelpermeationschromatographie) in doppeltlogarithmischer Darstellung auf, so ändert sich die Funktion mit steigendem Molekulargewicht von einem

Linearen zu einem $\overline{M}_n^{3.4}$-Potenzverhalten. Das Molekulargewicht $M = M_c$, bei welchem diese Kurvenänderung auftritt, ist das oben schon genannte kritische Molekulargewicht $M_c$. Diese dem Fachmann bekannte Definition des kritischen Molekulargewichtes $M_c$ findet man z.B. in S.M. Aharoni, Macromolecules, 1986, Vol. 19, S. 426 ff. Dort ist auch eine Liste von Polymeren mit den entsprechenden kritischen Molekulargewichten angegeben.

Entsprechend der dort aufgeführten Referenzliste lassen sich auch von anderen - in der Publikation nicht explizit genannten - Polymeren die Verhakungsdichten bestim men. In der oben zitierten Publikation von S. Wu findet man die Klassifikation einer Reihe von Polymeren nach ihrer Größe $M_e$.

Die Herstellung der erfindungsgemäß verwendbaren monofunktionellen Verbindungen kann nach bekannten Verfahren erfolgen. Beispielsweise kann man die verhakungsarmen Polymeren mit $\overline{M}_n$ zwischen 320 und 15.000 g/Mol durch Umsetzung mit einer geeigneten Verbindung monofunktionalisieren.

Dies erfolgt beispielsweise zur Herstellung von monofunktionellen Polydialkylsiloxanen, wie dies beispielhaft für die Verbindungen (I) nachfolgend erläutert ist:

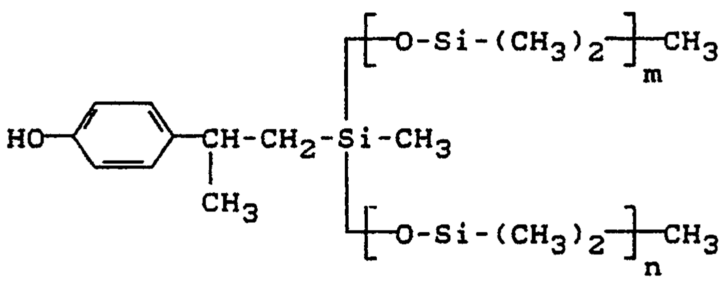

(I)

Hierbei sind n und m ganze Zahlen zwischen einschließlich 1 und einschließlich 20.

Ausgehend von den Verbindungen der Formel (II), die im Prinzip bekannt sind (siehe beispielsweise DDR-Patent 241 606, Japan Kokai 80/36 268 und Japan Kokai 77/93 718)

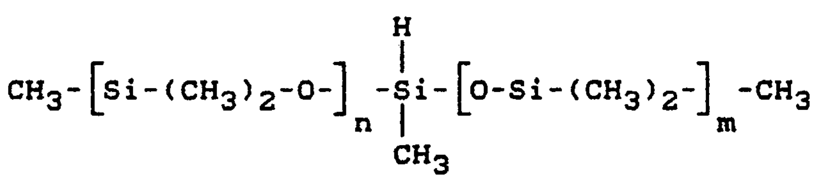

(II)

werden in Gegenwart von Katalysatoren wie z.B. Lamoreux-Katalysatoren bei Temperaturen zwischen 40 und 120 °C silysiertes Isopropenylphenol zugegeben, das Reaktionsprodukt mit Methanol, Wasser und Triethylamin bei Raumtemperatur gemischt und die Abspaltung der Silylgruppe dünnschichtchromatographisch verfolgt. Nach Neutralisation wird in bekannter Weise aufgearbeitet.

Die erfindungsgemäße Verwendung der monofunktionellen Verbindungen als Kettenabbrecher zur Herstellung von Polycarbonaten erfolgt vorzugsweise nach dem an sich bekannten Zweiphasengrenzflächenverfahren oder nach dem an sich bekannten Verfahren in homogener Phase (dem sogenannten Pyridinverfahren).

Gegenstand der vorliegenden Erfindung ist somit außerdem ein Verfahren zur Herstellung von thermoplastischen, hochmolekularen Polycarbonaten aus Diphenolen, Kettenabbrechern, gegebenenfalls Verzweigern nach dem Verfahren in homogener Phase oder nach dem Zweiphasengrenzflächenverfahren, das dadurch gekennzeichnet ist, daß man als Kettenabbrecher monofunktionelle Verbindungen mit einem Molekulargewicht ( $\overline{M}_n$, Zahlenmittel, ermittelt mit Hilfe der Gelpermeationschromatographie in geeigneten Lösungsmitteln) zwischen 320 und 15.000 g/Mol, bevorzugt 340 und 12.000 g/Mol, insbesondere bevorzugt zwischen 350 und 7.000 g/Mol, mit Ausnahme von monofunktionellen Polystyrolen einsetzt, wobei diese monofunktionellen Verbindungen als Polymere verhakungsarm sind, das heißt, ein $M_c$ von mindestens 14.000 g/Mol, vorzugsweise von 20.000 g/Mol bis 120.000 g/Mol, und phenolische OH-Gruppen als Monofunktion haben.

Gegenstand der vorliegenden Erfindung sind außerdem die nach dem vorstehenden erfindungsgemäßen Verfahren erhältlichen Polycarbonate.

Die Menge an Kettenabbrechern richtet sich einmal nach dessen Molekulargewicht und zum anderen nach dem anzustrebenden Molekulargewicht der thermoplastischen aromatischen Polycarbonate.

Vorzugsweise finden Kettenabbrecher mit vorgegebenem Molekulargewicht in denjenigen Mengen Einsatz, die in den Polycarbonaten die Kettenabbrecher keine mit Hilfe der Differential Scanning Calorimetry bei einer Aufheizrate von 20 Kelvin pro Minute meßbare eigene Phase -charakterisiert durch eine zusätzliche Glastemperatur -bilden.

Die Molekulargewichte ( $\overline{M}_w$, Gewichtsmittel, ermittelt aus der Gelpermeationschromatographie in Tetrahydrofuran oder Methylenchlorid bei 25 °C und einer Polymerkonzentration von 5 g/l) des aromatischen Mittelteils der erfindungsgemäßen Polycarbonate ohne die erfindungsgemäß verwendbaren Kettenenden sollen unabhängig von dem Molekulargewicht der eingesetzten erfindungsgemäß verwendbaren Kettenabbrecher mindestens 15.000 g/Mol, vorzugsweise zwischen 18.000 g/Mol und 350.000 g/Mol, insbesondere zwischen 20.000 g/Mol und 60.000 g/Mol, betragen.

Die dazu erforderliche Menge an erfindungsgemäßen Kettenabbrechern soll zwischen 0,1 und 25 Gew.-%, vorzugsweise zwischen 1 und 20 Gew.-% und insbesondere zwischen 1,5 bis 15 Gew.-%, betragen, wobei es für den Fachmann klar ist, daß bei Kettenabbrechern von $\overline{M}_n$ nahe 15.000 g/Mol eine größere Gewichtsmenge erforderlich ist als bei Kettenabbrechern von $\overline{M}_n$ nahe 320 g/Mol, um zum Polycarbonat mit ein und demselben aromatischen Mittelteil zu gelangen.

Für die erfindungsgemäße Herstellung der thermoplastischen Polycarbonate geeignete Diphenole sind im Prinzip alle Diphenole, deren OH-Gruppen unter den Bedingungen des Phasengrenzflächenverfahrens oder des Verfahrens in homogener Phase unter Polycarbonatbildung reagieren, also beispielsweise nicht durch sterische Behinderung oder sonstige molekulare Faktoren an der Reaktion gehindert sind, und die ansonsten entweder unsubstituiert sind oder nur solche Substitutionen haben, die unter den genannten Bedingungen der Polycarbonatherstellung inert sind, wie beispielsweise Alkyl-Substituenten oder Halogensubstituenten.

Geeignete Diphenole sind insbesondere solche der Formel

HO-D-OH (III)

worin -D- ein zweibindiger Arylen-Rest mit 6 bis 50 C-Atomen, vorzugsweise mit 12 bis 45 C-Atomen, sein kann, der einkernig oder mehrkernig sein kann, mehrkernig linear verknüpft, mehrkernig verzweigt verknüpft oder mehrkernig annelliert verknüpft sein kann, der als Bindeglieder noch Heteroatome sowie auch C-haltige Heterosegmente enthalten kann, wobei diese C-Atome der Heterosegmente nicht unter den vorstehend genannten 50 C-Atomen der Diphenole der Formel (III) subsummiert sind.

Die Diphenole der Formel (III) können unsubstituiert oder die vorstehend genannten inerten Substituenten haben, also beispielsweise alle erwähnten Halogensubstituenten oder die erwähnten Alkylsubstituenten, wobei die C-Atome potentieller Substituenten, also beispielsweise der Alkyl-Substituenten, unter die vorstehend genannten 50 C-Atome der Diphenole der Formel (III) zu subsummieren sind.

Geeignete Diphenole (III) sind beispielsweise

Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide,
α,α'-Bis-(hydroxyphenyl)-diisopropylbenzole,
sowie deren kernalkylierte und kernhalogenierte Verbindungen.

Diese und weitere geeignete Diphenole sind z.B. in den US-PS 3 028 365, 2 999 835, 2 148 172, 2 991 273, 3 271 367 und 2 999 846, in den deutschen Offenlegungsschriften 1 570 703, 2 063 050, 2 036 052, 2 211 956, der französischen Patentschrift 1 561 518, in der Monographie "H. Schnell, Chemistry and Physics of Polycarbonates, Interscience Publishers, Hew York 1964", in der deutschen P 38 32 396.6 (Le A 26 344) sowie in den japanischen Offenlegungsschriften 62039/1986, 62040/1986 und 145550/1986 beschrieben.

Bevorzugte Diphenole sind z.B.

4,4'-Dihydroxydiphenyl,
2,2-Bis-(4-hydroxyphenyl)-propan,
2,4-Bis-(4-hydroxyphenyl)-2-methylbutan,

1,1-Bis-(4-hydroxyphenyl)-cyclohexan,
α,α′-Bis-(4-hydroxyphenyl)-p-diisopropylbenzol,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-diemthyl-4-hydroxyphenyl)-cyclohexan,
α,α′-Bis-(3,5-dimethyl-4-hydroxyphenyl)-p-diisopropylbenzol,
2,2-Bis-(3,5-dichlor-4-hydroxyphenyl)-propan,
2,2-Bis-(3,5-dibrom-4-hydroxyphenyl)-propan und
1,1-Bis-(4-hydroxyphenyl)-3,3,5-trimethyl-cyclohexan.

Besonders bevorzugte Diphenole sind z.B.
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan,
1,1-Bis-(4-hydroxyphenyl)-cyclohexan und
1,1-Bis(4-hydroxyphenyl)-3,3,5-trimethyl-cyclohexan.

Es können auch beliebige Mischungen der vorgenannten Diphenole verwendet werden.

Neben den erfindungsgemäß verwendbaren monofunktionellen Verbindungen können noch maximal 50 Mol-%, bezogen auf die jeweilige Molmenge aller eingesetzten Kettenabbrecher, an anderen konventionellen Kettenabbrechern, also niedermolekulare Monophenole oder niedermolekulare Monocarbonsäurehalogenide wie Phenol selbst oder Benzoesäurechlorid, insbesondere jedoch Monoalkylphenole oder Dialkylphenole mit bis zu 20 C-Atomen in den Alkylsubstituenten mitverwendet werden. Diese bekannten Kettenabbrecher sind nicht verhakungsarm im Sinne der vorliegenden Erfindung.

Bevorzugte andere Kettenabbrecher sind also solche der Formel (IV)

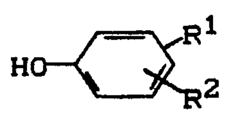

(IV)

worin $R^1$ und $R^2$ unabhängig voneinander H und Cl-$C_{20}$-Alkyl sein können, wobei jedoch mindestens einer der Reste $R^1$ oder $R^2$ jeweils ein Cl-$C_{20}$-Alkyl-Rest ist.

Gegenstand der vorliegenden Erfindung ist somit auch die Verwendung der eingangs definierten monofunktionellen Verbindungen mit einem Molekulargewicht ($\overline{M}_n$) zwischen 320 und 15.000 g/Mol als Kettenabbrecher in Kombination mit bis maximal 50 Mol-% - bezogen auf die jeweilige Molmenge aller eingesetzten Kettenabbrecher - an anderen konventionellen Kettenabbrechern zur Herstellung von thermoplastischen, aromatischen Polycarbonaten, beispielsweise nach dem an sich bekannten Zweiphasengrenzflächenverfahren oder nach dem an sich bekannten Verfahren in homogener Phase - dem sogenannten Pyridin-Verfahren).

Gegenstand der vorliegenden Erfindung ist außerdem ein Verfahren zur Herstellung von thermoplastischen, hochmolekularen Polycarbonaten aus Diphenolen, Kettenabbrechern, gegebenenfalls Verzweigern nach dem Verfahren in homogener Phase oder nach dem Zweiphasengrenzflächenverfahren, das dadurch gekennzeichnet ist, daß man als Kettenabbrecher die erfindungsgemäß verwendbaren monofunktionellen Verbindungen in Kombination mit bis zu maximal 50 Mol-%, bezogen auf die jeweilige Molmenge aller eingesetzten Kettenabbrecher, an anderen konventionellen Kettenabbrechern einsetzt.

Gegenstand der vorliegenden Erfindung sind außerdem die nach dem vorstehenden - erfindungsgemäßen - Verfahren erhältlichen Polycarbonate oder Polycarbonatgemische.

Für das erfindungsgemäße Verfahren geeignete Carbonatspender sind vor allem Phosgen und die Chlorkohlensäureester der Diphenole.

Die Bedingungen des Phasengrenzflächenverfahrens, Lösungsmittel, wäßrige alkalische Phase, Katalysator, Temperatur, Druck, Aufarbeitung sind die üblichen bekannten. Entsprechendes gilt für das Verfahren in homogener Phase.

Die Herstellung der erfindungsgemäßen Polycarbonate erfolgt vorzugsweise nach dem Phasengrenzflächenverfahren (vergleiche H. Schnell, "Chemistry and Physics of Polycarbonates", Polymer Reviews, Vol.

IX, Seite 33 ff., Interscience Publ. 1964). Hierbei werden die Diphenole der Formel (III) in wäßrig alkalischer Phase gelöst. Dazu werden die zur Herstellung der erfindungsgemäßen Polycarbonate erforderlichen erfindungsgemäßen monofunktionellen Verbindungen - gegebenenfalls in Kombination mit den anderen, nicht verhakungsarmen konventionellen Kettenabbrechern - in einem organischen Lösungsmittel gelöst, zugegeben. Dann wird in Gegenwart einer inerten, vorzugsweise Polycarbonat lösenden, organischen Phase mit Phosgen nach der Methode der Zweiphasengrenzflächenkondensation umgesetzt. Die Reaktionstemperatur liegt zwischen 0 und 40 °C.

Die gegebenenfalls mitzuverwendenden 0,05 bis 2 Mol-%, bezogen auf Mole eingesetzter Diphenole, an Verzweigern können entweder mit den Diphenolen in der wäßrig-alkalischen Phase vorgelegt werden oder mit den Kettenabbrechern in dem organischen Lösungsmittel gelöst vor der Phosgenierung zugegeben werden.

Anstelle der einzusetzenden Diphenole können auch deren Mono- und/oder Bis-Chlorkohlensäureester mitverwendet werden, wobei diese in organischen Lösungsmitteln gelöst zugegeben werden. Die Menge an Kettenabbrechern sowie an Verzweigern richtet sich dann nach Molen Diphenolat-Struktur-Einheiten, also beispielsweise

-O-D-O .

Ebenso kann bei Einsatz von Chlorkohlensäureester die Phosgenmenge in bekannter Weise entsprechend reduziert werden.

Die erfindungsgemäß verwendbaren monofunktionellen Verbindungen, insbesondere die der Formel (I), gegebenenfalls in Kombination mit den anderen, konventionellen - nicht verhakungsarmen - Kettenabbrechern, können auch während der Phosgenierung zugesetzt werden.

Geeignete organische Lösungsmittel für die Lösung der monofunktionellen Verbindungen sowie gegebenenfalls für die Verzweiger, anderen Kettenabbrecher und die Chlorkohlensäureester sind beispielsweise Methylenchlorid, Chlorbenzol, Aceton, Acetonitril sowie Mischungen dieser Lösungsmittel, insbesondere Mischungen aus Methylenchlorid und Chlorbenzol.

Als organische Phase für die Zweiphasengrenzflächenpolykondensation dient beispielsweise Methylenchlorid, Chlorbenzol sowie Mischungen aus Methylenchlorid und Chlorbenzol.

Die Herstellung der erfindungsgemäßen Polycarbonate nach dem Zweiphasengrenzflächenverfahren kann in üblicher Weise durch Katalysatoren wie tertiäre Amine, insbesondere tertiäre aliphatische Amine wie Tributylamin oder Triethylamin katalysiert werden; die Katalysatoren können vor Beginn der Phosgenierung oder während oder auch nach der Phosgenierung zugesetzt werden. Die Isolierung der erfindungsgemäßen Polycarbonate beziehungsweise Polycarbonatgemische erfolgt in bekannter Weise.

Die erfindungsgemäßen Polycarbonate können die für Polycarbonate üblichen Additive in den üblichen Mengen enthalten, also beispielsweise Stabilisatoren, Füllstoffe, Entformungsmitel, Pigmente und/oder Flammschutzmittel. Man kann diese während oder nach der Polycarbonatherstellung in bekannter Weise zugeben.

Die erfindungsgemäßen Polycarbonate können in bekannter Weise zu beliebigen Formkörpern via Extrusion oder Spritzguß auf den bekannten Verarbeitungsmaschinen verarbeitet werden.

Die erfindungsgemäßen Polycarbonate sowie die daraus hergestellten Formkörper zeichnen sich durch eine gute Eigenschaftskombination aus, insbesondere durch gutes Fließverhalten, hohe Transparenz, gute Verarbeitbarkeit und verbesserte Zähigkeit. Die Polycarbonate können auch mit anderen bekannten Polymeren vermischt werden und danach zu Formteilen verarbeitet werden.

## Beispiele

### Beispiel 1

Herstellung einer verhakungsarmen monofunktionellen Verbindung der Formel (I) mit n,m = 1:

354,6 g (1,6 Mol) α,ε-Bis-trimethylsiloxy-methylsilan ($M_2DH$) werden mit 0,311 g Lamoreux Katalysator (3,6 % Pt) auf 60 °C erhitzt. Hierzu werden 10 % (20,64 g, 0,1 Mol) des silylierten Isopropenylphenols gegeben. Nach dem Anspringen der Reaktion wird durch Zugabe des restlichen silylierten Isopropylphenols die Temperatur zwischen 80 und 100 °C gehalten. Nach vollendeter Zugabe wird noch zwei Stunden bei 100 °C gerührt und anschließend fraktioniert destilliert. Siedepunkt 148 °C/l mbar.

Zu 100 g (0,23 Mol) dieses geschützten Kettenabbrechers werden 500 ml Methanol/Wasser (v/v 1:1)

und 23,2 g (0,23 Mol) Triethylamin gegeben. Die Reaktionsmischung wird bei Raumtemperatur gerührt und die Abspaltung dünnschichtchromatographisch verfolgt. Nach dem Neutralisieren wird nach üblichen Methoden aufgearbeitet.

Die monofunktionelle Verbindung ist als Polymer verhakungsarm, weil Polydimethylsiloxan als Polymer ein kritisches Molekulargewicht $M_c$ von mehr als 24.000 g/Mol hat (vergleiche S.M. Aharoni, Macromolecules 1986, Vol. 19, Nr 2, S. 428).

Beispiel 2

Herstellung eines Polycarbonats mit einer monofunktionellen Endgruppe, die als Polymer verhakungsarm ist:

22,3 g (0,098 Mol) Bisphenol A, 6,75 g (0,17 Mol) NaOH und 383,3 g Wasser werden in einer Inertgas-Atmosphäre unter Rührungen gelöst. Dann fügt man eine Lösung von 1,16 g (3,3 mMol) des Kettenabbrechers (I) mit m = n = 1 in 190 ml Methylenchlorid hinzu. In die gut gerührte Lösung werden bei pH 12 bis 13 und 21 bis 23 °C 15,7 g (0,16 Mol) Phosgen eingeleitet. Danach werden 0,14 ml Ethylpiperidin zugegeben und noch 45 Minuten gerührt. Die bisphenolatfreie wäßrige Phase wird abgetrennt, die organische Phase - nach Ansäuern mit Phosphorsäure - mit Wasser neutral gewaschen und vom Lösungsmittel befreit.
rel. Viskosität, gemessen in Methylenchlorid bei 25 °C und einer Polymerkonzentration von 5 g/Liter): 1.307
Vicat B nach DIN 53 460: 149 °C Es wurde bei 300 °C die Schmelzviskosität gemessen.

Vergleichsbeispiel 1

Wie im oben genannten Beispiel, jedoch anstelle des Kettenabbrechers (I) mit 0,235 g (2,5 mMol) Phenol als Kettenabbrecher, wird ein Polycarbonat auf Basis Bisphenol A mit einer relativen Viskosität von 1.305 und einem Vicat B-Wert von 149,5 °C hergestellt.

| Ergebnisse (Messungen bei 300 °C): | | | |
|---|---|---|---|
| | Schmelzviskosität in Pa.sec bei einer Scherrate | | |
| | von 10 $sec^{-1}$ | von 100 $sec^{-1}$ | von 1000 $sec^{-1}$ |
| erfindungsgemäß (Beispiel 2) | 813,7 | 677,0 | 410,8 |
| Vergleichsbeispiel 1 | 930,0 | 735,0 | 450,0 |

Der Vergleich zeigt, daß schon die Verwendung einer niedrigmolekularen, verhakungsarmen Endgruppe eine wichtige Verbesserung im Fließverhalten bedeutet.

Weiterhin wurde nach ISO 180 die Kerbschlagzähigkeit nach Izod gemessen (Raumtemperatur):

| Ergebnis: | |
|---|---|
| erfindungsgemäß (Beispiel 2): | $a_k$ ($kJ/m^2$) 81,0 |
| Vergleichsbeispiel 1: | 42,0 |

Diese deutliche Verbesserung der Zähigkeit, die durch den erfindungsgemäßen Einsatz der verhakungsarmen Endgruppe erzielt wird, belegt den großen technischen Vorteil, den die Verwendung von verhakungsarmen Endgruppen als Kettenabbrecher bei der Polycarbonatsynthese bedeuten.

2. Vergleichsbeispiel

In Analogie zu Makromol. Chem. 190, 487 bis 493 (1989) wurde ein monofunktionelles Polystyrol mit einer phenolischen Hydroxylendgruppe hergestellt. Das resultierende Styrolpolymerisat mit einer phenolischen OH-Funktion wies eine Molmasse $\overline{M}_n$ = 10.000 g/Mol auf.

22,8 g (0,1 Mol) Bisphenol A (2,2-Bis-(4-hydroxyphenyl)propan, 26,0 g (0,65 Mol) NaOH und 258 g Wasser werden in einer Inertgasatmosphäre unter Rühren gelöst. Dann fügt man eine Lösung von 2,54 g des monofunktionalisierten Styrols und 0,9777 g 4-(1,3-Tetramethylbutyl)-phenols in 250 g Methylenchlorid zu. In die gut gerührte Lösung wurden bei pH 13 bis 14 und 21 bis 25° C 19,8 g (0,2 Mol) Phosgen eingeleitet. Nach 5 Minuten wird 0,2 ml N-Ethylpiperidin zugegeben und noch 45 Minuten gerührt. Die bisphenolatfreie wäßrige Phase wird abgetrennt, die organische Phase nach Ansäuern mit Phosphorsäure mit Wasser neutral gewaschen und vom Lösungsmittel befreit. Das Polycarbonat zeigte eine relative Lösungsviskosität von 1,253.

| | |
|---|---|
| Glastemperatur: | 149° C |
| Schmelzviskosität T=300° C, | |
| Scherrate 100 $sec^{-1}$:<br>Scherrate 1.000 $sec^{-1}$: | 196 Pa.sec<br>112 Pa.sec |

Die Kerbschlagzähigkeit, gemessen nach Iso 180, betrug bei Raumtemperatur nur 8,8 $kJ/m^2$ ($a_k$).

## Ansprüche

1. Verwendung monofunktioneller Verbindungen mit einem Molekulargewicht ( $\overline{M}_n$, Zahlenmittel, ermittelt mit Hilfe der Gelpermeationschromatographie in geeigneten Lösungsmitteln) zwischen 320 und 15.000 g/Mol - mit Ausnahme von monofunktionellen Polystyrolen, als Kettenabbrecher zur Herstellung von thermoplastischen, aromatischen Polycarbonaten, dadurch gekennzeichnet, daß die monofunktionellen Verbindungen als Polymere verhakungsarm sind, das heißt, ein $M_c$ von mindestens 14.000 g/Mol haben, und phenolische OH-Gruppen als Monofunktion haben.

2. Verfahren zur Herstellung von thermoplastischen hochmolekularen Polycarbonaten aus Diphenolen, Kettenabbrechern, gegebenenfalls Verzweigern nach dem Verfahren in homogener Phase oder nach dem Zweiphasengrenzflächenverfahren, dadurch gekennzeichnet, daß man als Kettenabbrecher die monofunktionellen Verbindungen gemäß Anspruch 1 einsetzt.

3. Polycarbonate, erhältlich nach dem Verfahren des Anspruchs 2.

4. Verwendung der monofunktionellen Verbindungen gemäß Anspruch 1 als Kettenabbrecher in Kombination mit bis maximal 50 Mol-% - bezogen auf die jeweilige Molmenge aller eingesetzten Kettenabbrecher - an anderen konventionellen Kettenabbrechern zur Herstellung von thermoplastischen, aromatischen Polycarbonaten.

5. Verfahren zur Herstellung von thermoplastischen, hochmolekularen Polycarbonaten aus Diphenolen, Kettenabbrechern, gegebenenfalls Verzweigen nach dem Verfahren in homogener Phase oder nach dem Zweiphasengrenzflächenverfahren gemäß Anspruch 2, dadurch gekennzeichnet, daß man als Kettenabbrecher die monofunktionellen Verbindungen gemäß Anspruch 1 in Kombination mit bis zu maximal 50 Mol-%, bezogen auf die jeweilige Molmenge aller eingesetzten Kettenabbrecher, an anderen konventionellen Kettenabbrechern einsetzt.

6. Polycarbonate oder Polycarbonatgemische, erhältlich nach dem Verfahren des Anspruchs 5.

7. Verwendung monofunktioneller Verbindungen als Kettenabbrecher zur Herstellung von aromatischen Polycarbonaten nach Anspruch 1, dadurch gekennzeichnet, daß die verhakungsarmen Polymere Polydialkylsiloxane sind.

8. Verfahren nach Anspruch 2, dadurch gekennzeichnet, daß als Kettenabbrecher monofunktionelle Verbindungen, deren verhakungsarme Polymere Polydialkylsiloxane sind, eingesetzt werden.

9. Polycarbonate, erhältlich nach dem Verfahren des Anspruchs 8.